# EUROPEAN PATENT SPECIFICATION

(11) **EP 3 431 807 B1**
(45) Date of publication and mention of the grant of the patent: **03.04.2024**
(21) Application number: 17766423.2
(22) Date of filing: 06.03.2017
(51) Int. Cl.: F16F 1/20, B60G 9/04, B60G 11/04, F16F 1/18

(54) **SPACE MAINTAINING MEMBER AND LEAF SPRING USING SAME**
ABSTANDSHALTER UND BLATTFEDER DAMIT
ÉLÉMENT DE MAINTIEN D'ESPACE ET RESSORT À LAMES L'UTILISANT

(30) Priority: 15.03.2016 JP 2016051300
(43) Date of publication of application: 23.01.2019
(73) Proprietor: NHK Spring Co., Ltd., Kanagawa 236-0004 (JP)
(72) Inventor: YANO Jyunichi, Yokohama-shi Kanagawa 236-0004 (JP); CHIHARA Hidenori, Yokohama-shi Kanagawa 236-0004 (JP); TANAKA Yuusuke, Yokohama-shi Kanagawa 236-0004 (JP)
(74) Representative: Simmons & Simmons LLP (Munich)
(86) International application number: PCT/JP2017/008712
(87) International publication number: WO 2017/159421

(56) References cited:
- JP-A- S62 237 128
- JP-A- S62 237 128
- JP-U- S5 973 646
- JP-Y2- S6 234 038
- US-A- 3 075 601

## Description

### TECHNICAL FIELD

This disclosure relates to a leaf spring using a space maintaining member used in a suspension device applied to a vehicle and the like.

### BACKGROUND ART

Suspension devices each including leaves of a leaf spring formed from a plate-like steel material (a steel sheet) have heretofore been widely used in vehicles such as four-wheel vehicles.

Along with a requirement for weight saving of a vehicle in recent years, a suspension device that employs the leaves also faces a weight-saving requirement. In the meantime, such a suspension device is also directed to an improvement in reliability properties in conjunction with the weight saving. Here, the reliability properties include inhibitions of delayed fracture and fatigue fracture.

A suspension device formed by stacking multiple leaves is disposed between a wheel axle and a chassis on a vehicle body side.

The axle to which wheels are fitted is rotatably supported by a housing. The housing is suspended by using U-bolts, for example, from the suspension device that employs the leaves. Eyes are formed at end parts of the leaves and these eyes are fixed to the chassis that constitutes a vehicle body.

Two sides in the vicinity of a central part of the multiple leaves are bundled and fixed together by using the U-bolts. Spacers are provided between the leaves at the central part thereof in order to prevent the leaves from rubbing while the vehicle is traveling. This is because if the leaves rub against each other, plated layers on surfaces of the leaves may fall off to cause corrosion, thus leading to breakage of the leaves. In the meantime, a washer may be provided between the leaves for the purpose of height adjustment and the like.

Patent Literatures 1 to 4 cited below are documents regarding publicly known inventions that relate to the present application.

### CITATION LIST

### Patent Literature

Patent Literature 1: Japanese Utility Model Registration Application Publication No. Sho 62-34038
Patent Literature 2: Japanese Utility Model Registration Application Publication No. Sho 59-73646 U
Patent Literature 3: Japanese Patent Publication No. Sho 62-237128 A
Patent Literature 4: US Patent Application No. US 3 075 601 A

### SUMMARY OF INVENTION

### Technical Problem

Meanwhile, a portion in the leaves located adjacent to an end part of a space maintaining member such as the spacer or the washer constitutes a fixed end, while the eye of the leaves constitutes a free end, thus establishing a cantilever form. As a consequence, the maximum moment occurs at the portion of the leaves adjacent to the end part of the spacer or the end part of the washer, and this adjacent portion becomes a maximum stress portion.

In addition, a central part of each leaf has a downward curved shape. Accordingly, moisture, corrosive substances, and foreign matters originating from rain water, a splatter of mud, and the like invade and stay at a boundary between the end part of the space maintaining member and the leaf located below the space maintaining member. Hence, a corrosion of the leaf may develop starting from this portion and may cause early breakage of the leaf.

The present invention has been made in view of the aforementioned circumstances, and an object thereof is to provide a leaf spring using a space maintaining member having high durability and high reliability.

### Solution to Problem

To solve the above problems, a first aspect of the present invention provides a leaf spring comprising a plurality of leaves and a space maintaining member provided and placed between the leaves of the leaf spring, which includes a body portion, and a sealing portion provided at an end part of the body portion and configured to come into close contact with the adjacent leaves to establish sealing from an external space, wherein the body portion and the sealing portion are formed integrally with each other, and wherein the end part of the body portion is fixed to the sealing portion by way of engagement, or engagement and adhesion.

According to the first aspect of the present invention, the sealing portion seals the vicinity of the body portion, and thus prevents the occurrence of corrosion of the leaves in the vicinity of the body portion.

According to a second aspect of the present invention, a method for manufacturing a space maintaining member of a leaf spring of the first aspect of the present invention is also provided.

### Advantageous Effects of Invention

According to the present invention, it is possible to realize a leaf spring using a space maintaining member having high durability and high reliability.

### BRIEF DESCRIPTION OF DRAWINGS

FIG. 1 is a plan view showing a suspension device according to an embodiment of the present invention which uses leaves and is fitted to a chassis.
FIG. 2A is a perspective view showing a spacer.
FIG. 2B is a diagram viewed in a direction of an arrow I in FIG. 2A.
FIG. 3A is a perspective view showing a spacer of another embodiment.
FIG. 3B is a diagram viewed in a direction of an arrow III in FIG. 3A.
FIG. 4A is a perspective view showing a spacer of still another embodiment.
FIG. 4B is a diagram viewed in a direction of an arrow IV in FIG. 4A.
FIG. 5A is an enlarged diagram viewed in a direction of an arrow II in FIG. 2B.
FIG. 5B is an enlarged diagram showing end parts of a body portion of the spacer before formation of sealing portions, which is viewed in the direction of the arrow II in FIG. 2B.
FIG. 6 is an enlarged front view of a suspension device of a second embodiment in a state where leaves of a main spring are fixed together.
FIG. 7A is a perspective view showing a spacer.
FIG. 7B is a cross-sectional view taken along the V-V line in FIG. 7A.
FIG. 8 is an enlarged schematic plan view of a suspension device according to another embodiment in a state where leaves are fixed together.

### DESCRIPTION OF EMBODIMENTS

Embodiments of the present invention will be described below in detail with reference to the drawings as appropriate.

### <<First embodiments

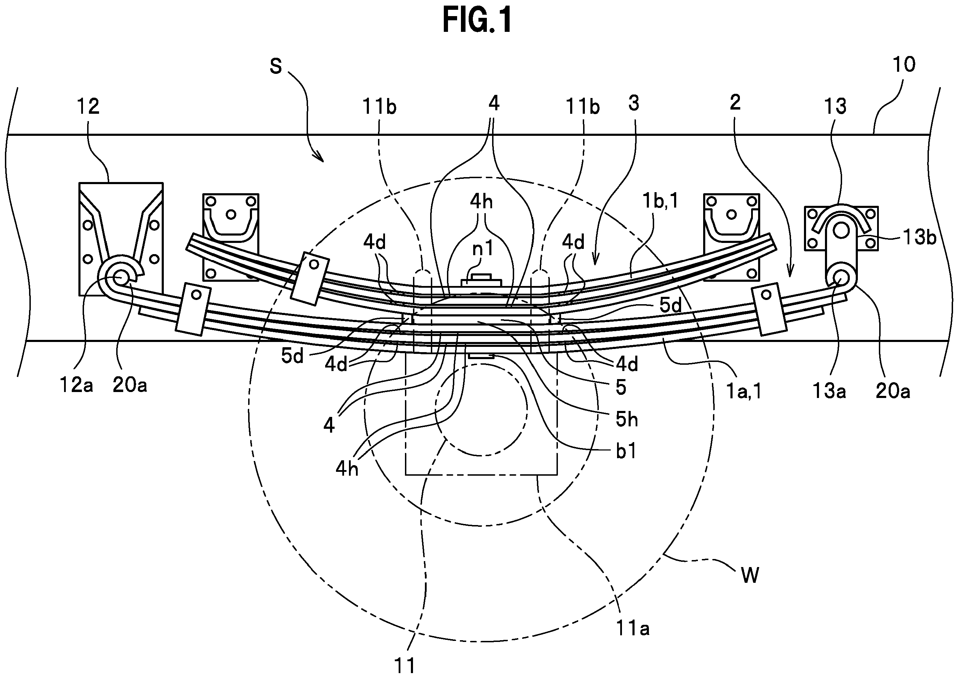

FIG. 1 is a plan view showing a suspension device according to a first embodiment of the present invention which uses leaves and is fitted to a chassis.

A suspension device S of the first embodiment which uses leaves 1 is provided to a vehicle body of a vehicle (not shown) such as a truck and configured to support an axle 11. To be more precise, the vehicle body is a chassis 10.

The suspension device S of the first embodiment includes a main spring 2 formed from leaves 1a (1), and a helper spring 3 formed from leaves 1b (1) . The helper spring 3 is placed above the main spring 2. Here, the suspension device S may be devoid of the helper spring 3.

The suspension device S includes curled eyes 20a that are provided at two ends of the main spring 2. The suspension device S is fixed to the chassis 10 through the eyes 20a.

The chassis 10 is formed from a frame that extends in a front-back direction, and includes a front fitting portion 12 and a rear fitting portion 13 used for fitting the suspension device S.

The axle 11 to which wheels W are fitted is rotatably supported by a housing 11a. The housing 11a is suspended from the suspension device S by using a pair of U-bolts 11b.

An insertion hole (not shown) is formed at the center of each leaf 1a (1) that constitutes part of the main spring 2. Meanwhile, an insertion hole (not shown) is formed at the center of each leaf 1b (1) that constitutes part of the helper spring 3. A center bolt b1 inserted into the insertion holes in the leaves 1a of the main spring 2 and into the insertion holes in the leaves 1b that constitute the helper spring 3 is fastened with a nut n1, thus fixing a central part of the main spring 2 and a central part of the helper spring 3 to each other.

The U-bolts 11b bundle and fix the leaves 1a of the main spring 2 and the leaves 1b of the helper spring 3 together on two sides while interposing the center bolt b1 in between.

### <Space maintaining member>

A space maintaining member flattened in shape is provided between each two leaves 1a of the main spring 2 shown in FIG. 1. Likewise, a space maintaining member flattened in shape is provided between each two leaves 1b of the helper spring 3. In the following, a spacer 4 to be provided between the leaves 1a of the main spring 2 will be described as an example.

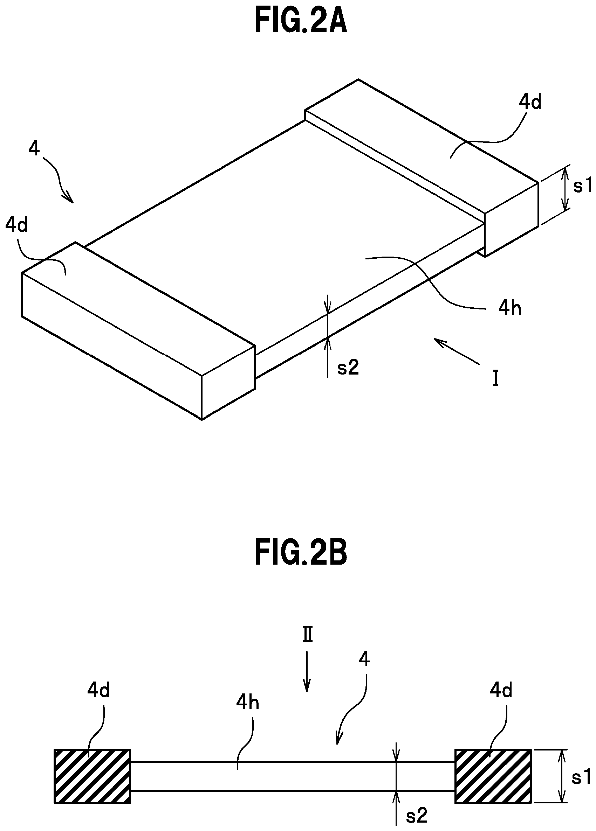

As shown in FIGs. 2A and 2B, the spacer 4 includes a body portion 4h and sealing portions 4d provided at two end parts and made of an elastic material which is the material having a sealing property as well, for instance. The body portion 4h is made of a metal such as a zinc-plated steel sheet (SGCC) or a resin such as POM (polyoxymethylene). Each sealing portion 4d is made of rubber such as NBR or a resin such as an elastomer and urethane resin, for example. Other materials are applicable to the sealing portions 4d as long as such a material can fulfill a function of tightly sealing the body portion 4h. In one embodiment, a thickness dimension s1 of each sealing portion 4d is larger than a thickness dimension s2 of the body portion 4h.

Each end part of the body portion 4h is fixed to the corresponding sealing portion 4d by adhesion. Thus, it is possible to reliably integrate the body portion 4h and the sealing portions 4d with one another.

The sealing portions 4d at the two end parts of the spacer 4 are elastically deformed in a thickness direction and come into close contact with the adjacent leaves 1a of the main spring 2 in a state where the leaves 1a are fastened to one another by using the center bolt b1 and the U-bolts 11b (see FIG. 1). Thus, the body portion 4h of the spacer 4 is sealed (tightly sealed) from an external space in a longitudinal direction of the leaves 1a. For this reason, in one embodiment, the thickness dimension s1 of each sealing portion 4d is set to the dimension larger than the thickness dimension s2 of the body portion 4h. Meanwhile, in another embodiment, the thickness dimension s1 of each sealing portion 4d has a dimension larger than a dimension between the adjacent leaves 1a.

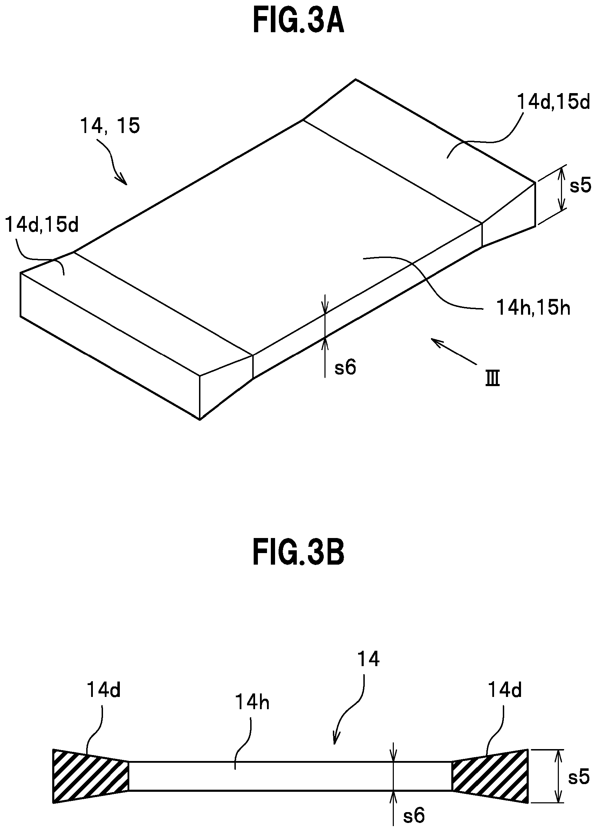

FIG. 3A is a perspective view showing a spacer of another embodiment, and FIG. 3B is a diagram viewed in a direction of an arrow III in FIG. 3A.

In this embodiment, a thickness dimension s5 of each sealing portion 14d has such a dimension that its portion near an end part of a body portion 14h has substantially the same dimension as a thickness dimension s6 of the body portion 14h while the dimension grows thicker as it moves away from the end part of the body portion 14h. Moreover, the thickness dimension s5 of the sealing portion 14d has a dimension larger than the dimension between the adjacent leaves 1. Meanwhile, the thickness dimension s5 is set so as to be able to seal each space between the leaves 1 in case an excessive load is applied to the suspension device S.

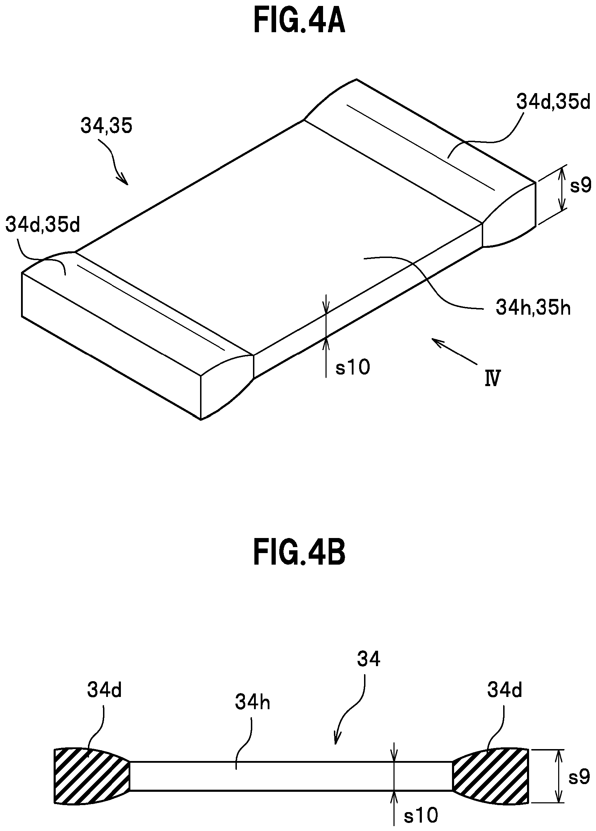

FIG. 4A is a perspective view showing a spacer of still another embodiment, and FIG. 4B is a diagram viewed in a direction of an arrow IV in FIG. 4A.

This embodiment can be configured such that a thickness dimension s9 of each sealing portion 34d is increased at a curvature of a convexly curved shape starting from a thickness dimension s10 of a body portion 34h.

Furthermore, in still another embodiment, it is possible to configure the thickness dimension s9 of each sealing portion 34d in such a way as to be increased at a curvature of a concavely curved shape starting from the thickness dimension s10 of the body portion 34h.

According to the above-described configurations, each sealing portion 4d is elastically deformed in the thickness direction, and comes into contact with and adheres tightly to the respective leaves 1a that are adjacent thereto in the state of being fastened together by using the center bolt b1 and the U-bolts 11b. In this way, it is possible to seal the two sides of the body portion 4h of the spacer 4 (the two sides in the longitudinal direction of the leaves 1a) with the sealing portions 4d, and thus to prevent moisture, corrosive substances, foreign matters, and the like from invading portions of the leaves 1a in the vicinity of the spacer 4. In addition, since the sealing portions 4d are made of a sufficiently soft material, the sealing portions 4d do not affect an amount of elastic deformation (or a spring constant) of each leaf.

Meanwhile, the thickness dimension s1 of each sealing portion 4d is set to the thickness dimension s1 such that the sealing portion 4d can maintain a performance to seal a portion of the body portion 4h of the spacer 4 in the vicinity of the sealing portion 4d even when the leaves are significantly deformed due to wind-up and the like while the vehicle equipped with the suspension device S is traveling. In this way, the two end parts of the body portion 4h in the longitudinal direction of the leaves 1a are reliably sealed with the sealing portions 4d even in the state where the vehicle is traveling.

Here, the spacers 4 may be provided at part of the spaces between the leaves 1a of the main spring 2 and part of the spaces between the leaves 1b of the helper spring 2.

### <Manufacture of space maintaining member>

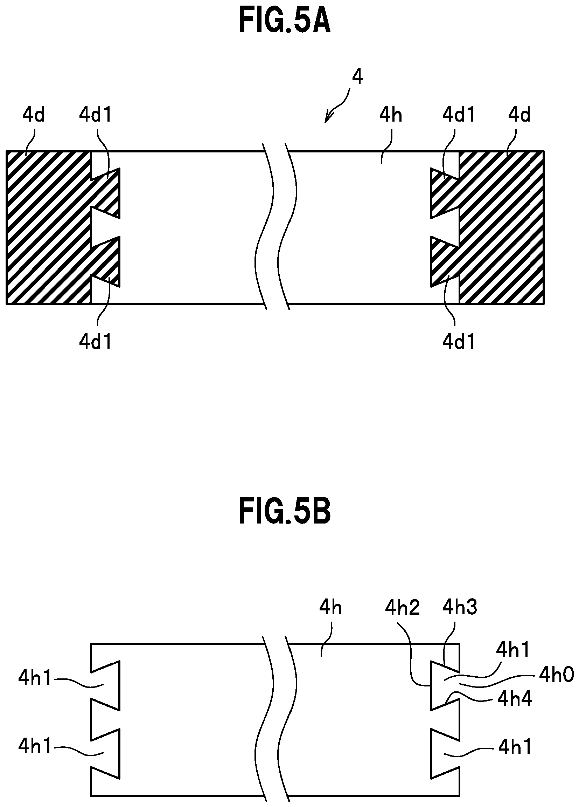

FIG. 5A is an enlarged diagram viewed in a direction of an arrow II in FIG. 2B, and FIG. 5B is an enlarged diagram showing the end parts of the body portion of the space maintaining member before formation of the sealing portions, which is viewed in the direction of the arrow II in FIG. 2B.

In one embodiment, the sealing portions are brought into either cure adhesion or adhesion by way of an adhesive to the end parts of a flat metal sheet such as a zinc-plated steel sheet (SGCC) in order to manufacture the space maintaining member. In another embodiment, the body portion 4h provided with dovetailed recesses 4h1, for example, at its end parts is formed by press work as shown in FIG. 5B to begin with. Then, the sealing portions 4d provided with bonded portions 4d1 are formed by pouring a liquid rubber raw material into the recesses 4h1 at the end parts of the body portion 4h. Thus, the spacer 4 shown in FIG. 5A is formed. Meanwhile, in another embodiment, the end parts of the body portion may be engaged with and thereby fixed to end parts of the sealing portions.

Since the end parts of the body portion 4h and the sealing portions 4d are fixed to one another by way of the engagement, or engagement and adhesion, it is possible to reliably integrate the body portion 4h with the sealing portions 4d.

### <Modified example of washer body 5>

A washer body 5 serving as the space maintaining member can also be formed into the washer body 5 having a configuration provided with sealing portions 5d and a washer portion 5h as with the spacer 4.

As a consequence, it is possible to seal each leaf 1 with the sealing portions 5d of the washer body 5. In addition, since the sealing portions 5d are made of a sufficiently soft material, the sealing portions 5d do not affect the amount of elastic deformation (or the spring constant) of each leaf.

### <<Second embodiment>>

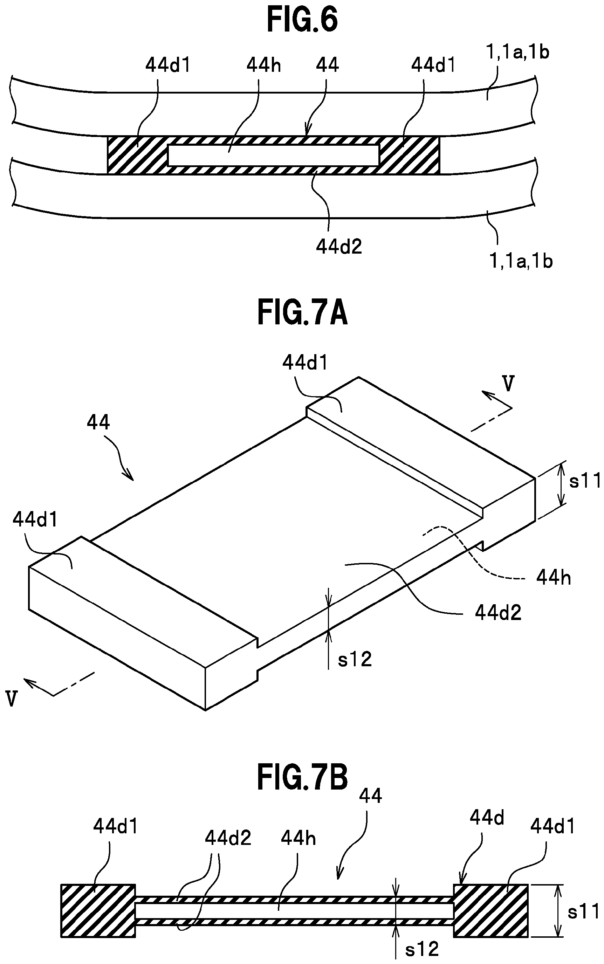

FIG. 6 is an enlarged front view of a suspension device of a second embodiment in a state where leaves therein are fixed together. FIG. 7A is a perspective view showing a spacer, and FIG. 7B is a cross-sectional view taken along the V-V line in FIG. 7A.

A spacer 44 of the second embodiment is configured to cover a body portion 44h at the center with a sealing portion 44d formed from an elastic body.

The rest of the configuration is the same as the first embodiment. Accordingly, the same constituents will be denoted by the same reference signs and detailed explanations thereof will be omitted.

The body portion 44h at the center of the spacer 44 is coated and covered with the sealing portion 44d formed from the elastic body and the like.

The body portion 44h is made of a metal such as a zinc-plated steel sheet (SGCC), a resin such as POM (polyoxymethylene), a watertight material, and the like. The sealing portion 44d is made of any of rubber such as NBR, a resin such as an elastomer and urethane resin, and the like. Other materials are applicable to the sealing portion 44d as long as such a material can fulfill a function of tightly sealing the body portion 44h.

In the spacer 44, surfaces of the body portion 44h at the center are subjected to coating with the sealing portion 44d and the like, and are thus covered in order to further reduce the chance of moisture, corrosive substances, foreign matters, and the like to invade the central part of each leaf 1.

A thickness dimension s11 of each end part 44d1 of the sealing portion 44d is made larger than a thickness dimension s12 of a central part 44d2 that covers the body portion 44h of the spacer 44. Meanwhile, the thickness dimension s11 of the end part 44d1 is set to the dimension s11 so as to enable the end part 44d1 to seal the space between the leaves 1 in case an excessive load is applied to the suspension device S.

According to the above-described configuration, when the central parts of the leaves 1 (1a, 1b) are fastened and fixed to one another by using the center bolt b1, the U-bolts 11b, and the like (see FIG. 1) as shown in FIG. 6, the end parts 44d1 are elastically deformed and compressed, thereby coming into close contact with the adjacent leaves 1. Thus, the sides of the body portion 44h are sealed with the end parts 44d1.

In addition, the upper and lower surfaces of the body portion 44h are covered and sealed with the central part 44d2 of the sealing portion 44d, whereby a risk of corrosion of the leaves 1 is further reduced.

Meanwhile, since the body portion 44h and the sealing portion 44d are formed integrally with each other, a sealing effect of the sealing portion 44d is enhanced.

A washer body 45 serving as the space maintaining member can also be formed into the washer body in which surfaces of a washer portion 45h at the center are coated and covered with a sealing portion 45d as with the spacer 44 (see FIG. 7A).

In this way, the central part side of each leaf 1 is sealed with end parts 45d1 as well as a central part 45d2 of the sealing portion 45d of the washer body 45, whereby invasion of the central part side of each leaf 1 by the moisture, corrosive substances, and foreign matters such as sands and muds is either inhibited or prevented. Thus, it is possible to significantly reduce the chance of corrosion of the leaves 1.

As described above, if the space maintaining member is any of the spacers (4, 14, and the like) and the washers (5, 15, and the like), then it is possible to obtain the spacer (4, 14, and the like) or the washer (5, 15, and the like) which can exert the above-mentioned effects.

Meanwhile, if a leaf spring (the suspension device S) includes the multiple leaves 1a and 1b as well as any of the above-described space maintaining members each provided between the corresponding pair of the leaves 1a or 1b, then it is possible to obtain the leaf spring that can exert the above-mentioned effects.

### <<Other embodiments>>

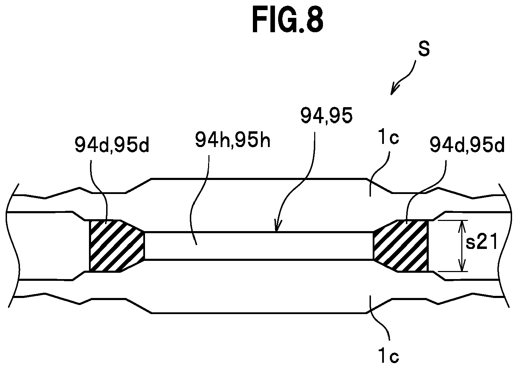

1. The first embodiment has described the example of the spacer 4 in which the sealing portions 4d are integrally formed at the two end parts of the body portion 4h. Instead, the spacer 4 (the space maintaining member) may be configured such that its body portion is formed separately from the sealing portions (sealing members) having a thickness larger than that of the body portion, then the sealing portions are provided between the leaves 1 in such a way as to be located adjacent to or in close contact with the two end parts of the body portion, and then the leaves 1 are fixed together by fastening the center bolt b1 and the U-bolts 11b so as to seal the leaves 1 in the vicinity of the body portion.
2. The first and second embodiments and the like have described the case where the sealing portions 4d of the spacer 4 are made larger than the thickness of the body portion 4h. Instead, the spacer 4 may be configured such that a portion having a thickness larger than that of the body portion 4h is formed at part of each sealing portion 4d, and then the thicker portions of the sealing portions 4d are brought into compressive deformation and close contact with the leaves 1 so as to allow the sealing portions 4d to seal the leaves 1 in the vicinity of the body portion 4h.
3. The first and second embodiments have described the example in which the each leaf 1 has a flat sheet shape. However, the configuration of the first embodiment is also applicable to a case of a leaf 1c with a variable thickness as shown in FIG. 8. FIG. 8 is an enlarged schematic plan view of a suspension device of an another embodiment in a state where leaves are fixed together.

The suspension device S of this embodiment has the following configuration.

A body portion 94h of a spacer 94 is formed into a shape in conformity with the shape of the adjacent leaves 1c. Then, a thickness dimension of each sealing portion 94d of the spacer 94 is set to a dimension larger than a dimension s21 between the leaves 1c.

The thickness dimension of each sealing portion 94d before deformation is set to a dimension with which the sealing portion 94d can come into close contact with and seal the adjacent leaves 1c when the leaves 1c sandwiching the spacer 94 are fastened and fixed by using the center bolt b1 and the U-bolts 11b. In the meantime, this thickness dimension is set to such a dimension with which the sealing portion 94d of the spacer 94 can come into close contact with and seal the adjacent leaves 1c in case an excessive load is applied to the suspension device S that employs the leaves 1c.

This configuration is also applicable to a washer body 95 to be provided between the adjacent leaves 1c. Specifically, a washer portion 95h of the washer body 95 is formed into a shape in conformity with the shape of the adjacent leaves 1c. Then, a thickness dimension of each sealing portion 95d of the washer body 95 before deformation is set to a dimension larger than the dimension s21 between the leaves 1c that sandwich the washer body 95.

The thickness dimension of each sealing portion 95d before deformation is set to such a dimension with which the sealing portion 95d can come into close contact with and seal the adjacent leaves 1c when the leaves 1c sandwiching the washer body 95 are fastened and fixed by using the center bolt b1 and the U-bolts 11b. In the meantime, this thickness dimension is set to such a dimension with which the sealing portion 95d of the washer body 95 can come into close contact with and seal the adjacent leaves 1c in case an excessive load is applied to the suspension device S that employs the leaves 1c.

Note that the sealing portions 4d, 5d, 14d, 34d, 44d, 45d, 94d, and 95d are made of a sufficiently soft material as with the sealing portions 4d, and therefore do not affect the amount of elastic deformation (or the spring constant) of each leaf.

Moreover, since the sealing portions (4d, 5d, and the like) are made of the material softer than the body portion (4h, 5h, and the like), the sealing portions (4d, 5d, and the like) can easily come into contact with and seal the adjacent leaves.

4. The first and second embodiments have described the example in which the sealing portions (4d, 5d, 44d, and 45d) are formed from the elastic body. However, the sealing portions (4d, 5d, 44d, and 45d) do not always have to be formed from the elastic body as long as the sealing portions are brought into compressive deformation when the leaves 1 are fastened and fixed by using the center bolt b1 and the U-bolts 11b, so that the sealing portions can come into close contact with the leaves 1 and seal any of the body portions (4h and 44h) and the washer portions (5h and 45h) . Nonetheless, the sealing portions (4d, 5d, 44d, and 45d) are most preferably formed from the elastic body made of a watertight material so that the sealing can be reliably achieved.
5. Although the first and second embodiments and the like have described various configurations, it is possible to apply part of any of the configurations or to combine any of the combinations as appropriate.
6. The first and second embodiments and the like have only described certain examples of the present invention to be defined by the appended claims. It is to be understood that various modified modes and specific modes are also possible within the scope defined by the claims.

### Reference Signs List

1, 1a, 1b leaf
4, 14, 34, 44 spacer (spacer member, space maintaining member)
5, 15, 35, 45 washer body (spacer member, space maintaining member)
4h, 14h, 34h, 44h body portion
4d, 5d, 14d, 34d sealing portion
5h, 15h, 35h washer portion (body portion)
S suspension device (leaf spring)

## Claims

1. A leaf spring (S) comprising:
a plurality of leaves (1, 1a, 1b); and
a space maintaining member (4, 5) being provided between the leaves (1, 1a, 1b), wherein the space maintaining member (4, 5) placed between the leaves (1, 1a, 1b) of the leaf spring (S) comprises:
a body portion (4h, 5h); and
a sealing portion (4d, 5d) provided at an end part of the body portion (4h, 5h) and configured to come into close contact with the adjacent leaves (1, 1a, 1b) to establish sealing from an external space,
wherein the body portion (4h, 5h) and the sealing portion (4d, 5d) are formed integrally with each other,
**characterized in that** the end part of the body portion (4h, 5h) is fixed to the sealing portion (4d, 5d) by way of engagement, or engagement and adhesion.

2. The leaf spring (S) according to claim 1, wherein
the sealing portion (4d, 5d) is provided at the end part of the body portion (4h, 5h) in a longitudinal direction of the leaves (1, 1a, 1b), and
when the leaves (1, 1a, 1b) are pressed in a leaf thickness direction and fixed to each other, the sealing portion (4d, 5d) is deformed and comes into close contact with the adjacent leaves (1, 1a, 1b) to establish the sealing from the external space in the longitudinal direction.

3. The leaf spring (S) according to claim 2, wherein the sealing portion (4d, 5d) has a section larger in thickness than the body portion (4h, 5h).

4. The leaf spring (S) according to claim 1, wherein the body portion (4h, 5h) is covered with the sealing portion (4d, 5d).

5. The leaf spring (S) according to claim 1, wherein the sealing portion (4d, 5d) is made of a material softer than the body portion (4h, 5h).

6. The leaf spring (S) according to claim 1, wherein the space maintaining member (4, 5) is any of a spacer (4) and a washer.

7. The leaf spring (S) according to claim 1, wherein a thickness of a portion of the sealing portion close to an end of the body portion is substantially the same as a thickness of the body portion and is gradually increased as the portion of the sealing portion moves away from the end of the body portion.

8. The leaf spring (S) according to claim 7, wherein the thickness of the portion of the sealing portion close to an end of the body portion is gradually increased at a curvature of a convexly curved shape as the portion of the sealing portion moves away from the end of the body portion.

9. A manufacturing method for manufacturing a space maintaining member (4) of a leaf spring (S) according to any one of claims 1 to 8, the leaf spring (S) comprising the plurality of leaves (1, 1a, 1b) and said space maintaining member (4), the method comprising the steps of:
forming the body portion (4h) with dovetailed recesses (4h1) at its end parts by press work, and
pouring a liquid rubber raw material into the recesses (4h1) at the end parts of the body portion (4h) to form sealing portions (4d) provided with bonded portions (4d1).

## Patentansprüche

1. Blattfeder (S), aufweisend:
eine Vielzahl von Blättern (1, 1a, 1b); und
einen Abstandshalter (4, 5), der zwischen den Blättern (1, 1a, 1b) vorgesehen ist, wobei der zwischen den Blättern (1, 1a, 1b) der Blattfeder (S) angeordnete Abstandshalter (4, 5) Folgendes aufweist:
einen Körperabschnitt (4h, 5h); und
einen Dichtungsabschnitt (4d, 5d), der an einem Endteil des Körperabschnitts (4h, 5h) vorgesehen und so gestaltet ist, dass er in engen Kontakt mit den benachbarten Blättern (1, 1a, 1b) kommt, um eine Abdichtung gegenüber einem Außenraum herzustellen,
wobei der Körperabschnitt (4h, 5h) und der Dichtungsabschnitt (4d, 5d) einstückig miteinander ausgebildet sind,
**dadurch gekennzeichnet, dass** der Endteil des Körperabschnitts (4h, 5h) an dem Dichtungsabschnitt (4d, 5d) durch Eingriff oder Eingriff und Haftung befestigt ist.

2. Blattfeder (S) nach Anspruch 1, wobei
der Dichtungsabschnitt (4d, 5d) an dem Endteil des Körperabschnitts (4h, 5h) in einer Längsrichtung der Blätter (1, 1a, 1b) vorgesehen ist, und
dann, wenn die Blätter (1, 1a, 1b) in einer Blattdickenrichtung gepresst und aneinander befestigt werden, der Dichtungsabschnitt (4d, 5d) verformt wird und mit den benachbarten Blättern (1, 1a, 1b) in engen Kontakt kommt, um die Abdichtung vom Außenraum in Längsrichtung herzustellen.

3. Blattfeder (S) nach Anspruch 2, wobei der Dichtungsabschnitt (4d, 5d) einen Querschnitt aufweist, der dicker als der Körperabschnitt (4h, 5h) ist.

4. Blattfeder (S) nach Anspruch 1, wobei der Körperabschnitt (4h, 5h) mit dem Dichtungsabschnitt (4d, 5d) abgedeckt ist.

5. Blattfeder (S) nach Anspruch 1, wobei der Dichtungsabschnitt (4d, 5d) aus einem weicheren Material als der Körperabschnitt (4h, 5h) hergestellt ist.

6. Blattfeder (S) nach Anspruch 1, wobei es sich bei dem Abstandshalter (4, 5) um eine Distanzplatte (4) oder eine Unterlegscheibe handelt.

7. Blattfeder (S) nach Anspruch 1, wobei die Dicke eines Abschnitts des Dichtungsabschnitts in der Nähe eines Endes des Körperabschnitts im Wesentlichen die gleiche ist wie die Dicke des Körperabschnitts und mit Entfernen des Abschnitts des Dichtungsabschnitts von dem Ende des Körperabschnitts graduell zunimmt.

8. Blattfeder (S) nach Anspruch 7, wobei die Dicke des Abschnitts des Dichtungsabschnitts nahe einem Ende des Körperabschnitts mit einer konvex gekrümmten Form mit Entfernen des Abschnitts des Dichtungsabschnitts von dem Ende des Körperabschnitts graduell zunimmt.

9. Herstellungsverfahren zur Herstellung eines Abstandshalters (4) einer Blattfeder (S) nach einem der Ansprüche 1 bis 8, wobei die Blattfeder (S) die Mehrzahl von Blättern (1, 1a, 1b) und den Abstandshalter (4) aufweist, wobei das Verfahren die folgenden Schritte umfasst:
Ausbilden des Körperabschnitts (4h) mit schwalbenschwanzförmigen Aussparungen (4h1) an seinen Endteilen durch Pressbearbeitung, und
Gießen eines flüssigen Rohmaterials in die Aussparungen (4h1) an den Endteilen des Körperabschnitts (4h), um Dichtungsabschnitte (4d) auszubilden, die mit verbundenen Abschnitten (4d1) versehen sind.

## Revendications

1. Ressort à lames (S) comprenant :
une pluralité de lames (1, 1a, 1b) ; et
un élément de maintien d'espace (4, 5) qui est prévu entre les lames (1, 1a, 1b), dans lequel l'élément de maintien d'espace (4, 5) placé entre les lames (1, 1a, 1b) du ressort à lames (S) comprend :
une partie de corps (4h, 5h) ; et
une partie d'étanchéité (4d, 5d) prévue au niveau d'une partie d'extrémité de la partie de corps (4h, 5h) et configurée pour venir en contact étroit avec les lames (1, 1a, 1b) adjacentes pour établir l'étanchéité à partir d'un espace externe,
dans lequel la partie de corps (4h, 5h) et la partie d'étanchéité (4d, 5d) sont formées de manière solidaire entre elles,
**caractérisé en ce que** la partie d'extrémité de la partie de corps (4h, 5h) est fixée sur la partie d'étanchéité (4d, 5d) au moyen de mise en prise ou de mise en prise et d'adhérence.

2. Ressort à lames (S) selon la revendication 1, dans lequel :
la partie d'étanchéité (4d, 5d) est prévue au niveau de la partie d'extrémité de la partie de corps (4h, 5h) dans une direction longitudinale des lames (1, 1a, 1b), et
lorsque les lames (1, 1a, 1b) sont pressées dans une direction d'épaisseur de lame et fixées entre elles, la partie d'étanchéité (4d, 5d) est déformée et vient en contact étroit avec les lames (1, 1a, 1b) adjacentes pour établir l'étanchéité à partir de l'espace externe dans la direction longitudinale.

3. Ressort à lames (S) selon la revendication 2, dans lequel la partie d'étanchéité (4d, 5d) a une plus grande section en épaisseur que la partie de corps (4h, 5h).

4. Ressort à lames (S) selon la revendication 1, dans lequel la partie de corps (4h, 5h) est recouverte avec la partie d'étanchéité (4d, 5d).

5. Ressort à lames (S) selon la revendication 1, dans lequel la partie d'étanchéité (4d, 5d) est réalisée à partir d'un matériau plus souple que la partie de corps (4h, 5h).

6. Ressort à lames (S) selon la revendication 1, dans lequel l'élément de maintien d'espace (4, 5) est l'un quelconque parmi un dispositif d'espacement (4) et une rondelle.

7. Ressort à lames (S) selon la revendication 1, dans lequel une épaisseur d'une partie de la partie d'étanchéité à proximité d'une extrémité de la partie de corps est sensiblement la même qu'une épaisseur de la partie de corps et est progressivement augmentée au fur et à mesure que la partie de la partie d'étanchéité s'éloigne de l'extrémité de la partie de corps.

8. Ressort à lames (S) selon la revendication 7, dans lequel l'épaisseur de la partie de la partie d'étanchéité à proximité d'une extrémité de la partie de corps est progressivement augmentée au niveau d'une courbure d'une forme courbée de manière convexe au fur et à mesure que la partie de la partie d'étanchéité s'éloigne de l'extrémité de la partie de corps.

9. Procédé de fabrication pour fabriquer un élément de maintien d'espace (4) d'un ressort à lames (S) selon l'une quelconque des revendications 1 à 8, le ressort à lames (S) comprenant la pluralité de lames (1, 1a, 1b) et ledit élément de maintien d'espace (4), le procédé comprenant les étapes consistant à :
former la partie de corps (4h) avec des évidements en queue d'aronde (4h1) au niveau de ses parties d'extrémité par travail à la presse, et
déverser une matière première de caoutchouc liquide dans les évidements (4h1) au niveau des parties d'extrémité de la partie de corps (4h) afin de former des parties d'étanchéité (4d) prévues avec des parties liées (4d1).
